# EUROPEAN PATENT SPECIFICATION

(11) **EP 1 352 123 B1**
(45) Date of publication and mention of the grant of the patent: **31.03.2010**
(21) Application number: 01270648.7
(22) Date of filing: 10.12.2001
(51) Int. Cl.: D21C 5/02

(54) **A PROCESS FOR RECOVERING INORGANIC MATERIAL FROM DEINKING SLUDGE**
VERFAHREN ZUR GEWINNUNG VON ANORGANIKA AUS DEINKINGSCHLAMM
PROCEDE POUR RECUPERER LES MATIERES INORGANIQUES A PARTIR D'UNE BOUE DE DESENCRAGE

(30) Priority: 14.12.2000 SE 0004619
(43) Date of publication of application: 15.10.2003
(73) Proprietor: Stora Enso AB, 791 80 Falun (SE)
(72) Inventor: DAHLBLOM, Boris, S-314 91 Hyltebruk (SE); DAHLIN, Jörgen, S-791 74 Falun (SE); LARSSON, Mats, Erik, S-791 74 Falun (SE); MATTSSON, Erik, S-790 23 Svärdsjö (SE); SUNDKVIST, Arne, S-333 33 Smalandsstenar (SE); ÄLMQVIST, Arnold, S-314 32 Hyltebruk (SE)
(74) Representative: Lundquist, Lars-Olof
(86) International application number: PCT/SE2001/002714
(87) International publication number: WO 2002/048450

(56) References cited:
- EP-A1- 0 742 310
- GB-A- 1 366 020
- U. HAMM ET AL.: 'Nassoxidation von deinkingschlaemmen' WOCHENBLATT FUER PAPIERFABRIKATION vol. 1, 1998, pages 15 - 23, XP002966281
- M. MODELL ET AL.: 'Supercritical water oxidation of pulp mill sludges' ENGINEERING CONFERENCE 1991, pages 393 - 403, XP002970609

## Description

The present invention relates to a process for continuously recovering inorganic material from a deinking sludge obtained as reject material in the recovery of recycled fiber from waste paper.

Such deinking sludge has a dry solids content that is normally less than 8% prior to dewatering and contains organic material in an amount normally in excess of 35%, the remainder being inorganic material, calculated on the dry solids content.

The term waste paper refers to paper or cardboard which, after use, is recovered in the form of recycled fiber and then, after slashing, is re-used to produce paper or cardboard or for some other industrial purpose. Recycled fiber thus refers to fiber material that has previously been used in a paper or cardboard product.

Paper used for manufacturing various types of printed matter, such as newspaper, magazine, LWC and fine paper, contains a plurality of additives. The finished printed paper products also contain printing ink. The additives comprise primarily fillers, pigments and colorants, but other additives may also be included. The quantities and the relative proportions of the various additives vary depending on the type of printing paper. The main purpose of the fillers is to increase the opacity of the printing paper. Clay, calcium carbonate, titanium dioxide and/or talcum are generally used as fillers, but other materials may be used. Pigment is included in the coating layer of coated paper or cardboard. Clay and calcium carbonate are mainly used as pigments, either separately or in combination, however, titanium dioxide and talcum may also be used.

When recovering recycled fiber from waste paper, the waste paper is subjected to a cleaning process in order to decolour the fibers and remove impurities. The various rejects thus obtained are then combined to produce a deinking sludge with relatively high water content. No industrially practicable method for recovering valuable material from this deinking sludge has so far been used or even proposed and, instead, the deinking sludge represents a residual product which, after dewatering, can be used in the cement and brick-making industry or be incinerated using conventional technology. The ash obtained from incineration is deposited in suitable locations or used as land fill. Some factories and countries even deposit deinking sludge that has not been incinerated, which is a load from the environmental point of view.

In the article entitled "Supercritical water oxidation of pulp mill sludges" by M. Modell et al, 1991 Engineering Conference, pages 393-403, an alternative method to conventional incineration is described for treating sludge from pulp mills. The method, generally termed the SCWO process (Super-Critical Water Oxidation), is based on carbonization-free oxidation of the organic part of the sludge in the presence of water in a supercritical state. This means that the oxidation of organic material takes place at a temperature and at a pressure above the supercritical point in the phase diagram of the water, i.e. 374°C/22 MPa. Oxidation of organic material at the relatively low temperatures is possible due to the high pressure and the presence of water as reaction medium. At its supercritical point 374°C/22 MPa and in its supercritical area above this point, the water behaves as a supercritical fluid and in this state the supercritical water acts as an efficient solvent for organic material and gases. The article only discusses sludges obtained in the conventional manufacture of pulp and thus mentions nothing about the specific deinking sludge obtained from the recovery of recycled fiber from waste paper, nor does it mention anything about the use of the method for recovering inorganic material from deinking sludge. An article entitled "Nassoxidation von Deinkingschlämmen" by U. Hamm and L. Göttsching, Wochenblatt für Papierfabrikation 1, 1998, pages 15-23 describes results from experiments in deoxidizing deinking sludge using the SCWO process mentioned above. It is clear from the article that, even at extremely high oxidation of the organic material in the deinking sludge, an inorganic material is obtained with such low brightness, less than 60% ISO, that it cannot be used as filler. The state of the art discussed does not therefore show or intimate the recovery of filler from deinking sludge for re-use in a paper-manufacturing process making use of oxidation in accordance with said SCWO process.

The object of the present invention is to provide a process for recovering inorganic material from deinking sludge, said material being of such quality as to be suitable for re-use in the paper-manufacturing process.

The process in accordance with the invention is **characterized in that** it comprises the following steps:
(a) controlling and/or adjusting the proportion of organic material in the form of fiber material in the deinking sludge so that it is or becomes 15-40%, calculated on the dry solids content,
(b) adjusting the water content of the deinking sludge so that the dry solids content becomes 10-35%, step (a) and step (b) being so adjusted to each other that the deinking sludge is pumpable,
(c) increasing the pressure of the pumpable deinking sludge to at least 22 MPa,
(d) increasing the temperature of the pumpable deinking sludge to supercritical or almost supercritical temperature,
(e) adding a medium containing oxygen to the deinking sludge in a sufficient quantity to oxidize all organic material, which takes place at supercritical temperature and pressure in a reactor,
(f) recovering energy released at the oxidation of the organic material in a suitable form, and
(g) subjecting the flow of material from which energy has been recovered and which comprises said inorganic material, gases and water, to material separation comprising recovery of the valuable inorganic material.

The invention is described further in the following with reference to the drawings.

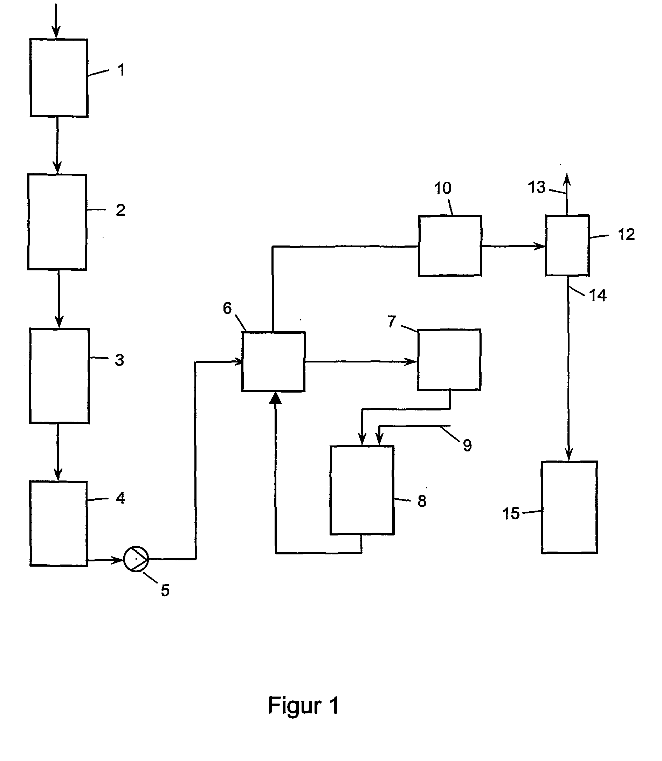

Figure 1 shows a flowchart for a recovery plant for recovering inorganic material from deinking sludge in accordance with the invention.

Deinking sludge from a cleaning process for waste paper is charged into a storage tank 1 and stirred constantly to prevent sedimentation. If the deinking sludge has not been treated in special dewatering equipment, it normally has a dry solids content below 8%, usually 5% or lower, the remainder being water. The deinking sludge normally has an organic material content over 35%, calculated on the dry solids content, usually within the interval 45-50%, the content of inorganic material thus being below 65% and 55-50%, respectively.

The organic material comprises fiber material, printing ink, other colorants, various types of organic additives and binders, the fiber material thus constituting the largest proportion. The fiber material consists of fibers and fiber parts, so-called "fines". The inorganic material comprises primarily filler, but even other inert materials may be included, such as pigment, depending on the type of paper or cardboard product constituting the waste paper.

The deinking sludge is conveyed continuously to a pretreating plant 2 for suitable pretreatment so that the proportion of fiber material of the dry solids content is reduced to a predetermined level. Several different methods are available as suitable pretreatment to achieve such a reduction in the fiber material content, such as flotation, sedimentation, vortex cleaning, screening, centrifuging, biological decomposition (aerobic or anaerobic) of a part of the fiber material, converting a part of the fiber material to ethanol through enzymatic or some other type of hydrolysis followed by fermentation, or a combination of two or more of these technologies, which may be performed in one or more steps. The pretreatment of the deinking sludge in order to reduce the proportion of fiber material to a predetermined level may also be integrated in the deinking process. In this case no separate pretreatment plant is required. Reducing the content of fiber material so that the amount of organic material remaining is between 15 and 40% is important if a process is to be obtained that has acceptable operating economy. A reduction in the content of organic material increases the capacity of a SCWO process plant since deinking sludge with a higher dry solids content can be used. This is in turn a result of the COD content being lower, and of better pumpability of the deinking sludge. Furthermore, the cost of oxygen gas is lower if the ratio between organic and inorganic material decreases.

The deinking sludge treated in this manner is then conveyed to a plant 3 to increase the concentration of dry solids to a value within the range 15-35%. This increase in the concentration may be achieved by performing a suitable treatment that either directly produces this concentration interval or first a considerably higher concentration after which the deinking sludge is diluted so that a concentration within the interval 15-35% is obtained. Several methods are available as suitable treatment to achieve such an increase of the dry solids content, such as sedimentation, vortex cleaning, centrifuging, pressing in a suitable press, or a combination of two or more of these technologies. Thickening of the deinking sludge is necessary in order to reduce the amount of water present during the oxidation performed down-stream. When the dry solids content is increased, or immediately thereafter, the deinking sludge may be subjected to washing, particularly if the salt content in the sludge is too high. Metal ions are removed during this wash and may form metal oxides in the subsequent oxidation which may discolour the inorganic material recovered, thereby reducing its brightness. In order to avoid salt deposits, so-called encrustations, in the plant the salt content should be kept as low as possible, preferably below 1000 ppm. The deinking sludge must still be pumpable after the increase in dry solids content in order to enable continued processing. The two main initial steps must therefore be adjusted to each other so that the deinking sludge leaving the plant 3 is in pumpable state and also has a COD content of 40-200 g/l, preferably 60-150 g/l. Dispersion methods may be used to increase the pumpability of the deinking sludge.

The pumpable deinking sludge is conveyed to a storage tank 4 provided with an arrangement to homogenize the deinking sludge so that a uniform concentration is maintained in the storage tank 4 and so that particularly the fiber material is disintegrated and/or prevented from forming large particles of fibers due to the action of a pump. The deinking sludge is pumped from the storage tank 4 by means of a pump arrangement comprising a high-pressure pump 5 that give the deinking sludge an operating pressure of at least 22 MPa.

The deinking sludge is then conveyed to a heating device from it is discharged with a suitable temperature. This temperature is preferably at most 425°C. The heating device comprises a heat exchanger 6 which functions throughout the continuous operation, and thereafter a preheater 7 which may be run on natural gas, for instance, and is connected if the heat exchanger has insufficient capacity, such as when the recovery plant is being started up.

The deinking sludge, including the water in supercritical or near supercritical state, is conveyed to a reactor 8 which may consist of a vertical reaction vessel, for instance, the deinking sludge being supplied at the top of the reactor. The reactor may alternatively be in the form of an elongate reaction pipe which may be bent, e.g. in a flat serpentine loop or in a circular spiral. (The SCWO process plant may naturally use a reactor of some other shape.) A medium containing oxygen, preferably liquid oxygen, is simultaneously fed in at the top of reactor 8 through a pipe 9 in order to be intimately mixed with the deinking sludge. The oxygen oxidizes the organic material in the deinking sludge and the exothermal reaction thus obtained gives a desired increase in temperature in the reactor. The reaction is controlled so that the temperature in the reactor is kept above 500°C. The temperature is preferably kept within the interval 500-650°C, most preferably within the interval 550-600°C. The amount of oxygen supplied is adjusted to the requirement measured, which lies within said COD content 40-200 g/l. Under these temperature and pressure conditions, and adjustment of the oxygen supply, a complete oxidation of all organic material in the deinking sludge is achieved. Operation at a controlled temperature as stated above, preferably below 650°C, ensures that the structure of the inorganic material is not destroyed. During the continuous operation a flow of material containing solid and dissolved inorganic material, gases and water is withdrawn from the reactor. This flow of material is caused to pass the heat exchanger 6 in order to transfer a part of its heat content to the ingoing flow of deinking sludge. The outgoing flow of material then passes a steam generator 10 (or some other system for recovering energy), where the remaining energy can be recovered, a final cooler and then a pressure-reducing device.

The material flow cooled and pressure-relieved in this way is finally conveyed to a separation plant comprising a separator 12 for separating the gas from the aqueous inorganic material. The gas phase is carried through a pipe 13 out into the atmosphere or is collected in suitable manner to make use of its constituents, e.g. carbon dioxide, while the aqueous inorganic material in the form of a suspension is withdrawn through a pipe 14. If necessary, the suspension may be thickened in suitable manner, e.g. in a sedimentation tank or screening device (not shown). Washing may also be performed either before or after the thickening in order to remove any residual soluble compounds. The separated water is conveyed to recipients or is returned to one of the process steps in the mill.

The properties of the inorganic material thus recovered are determined. If the brightness is found to be about 68% ISO or above, the inorganic material can be used directly as filler in a paper manufacturing process, provided the material fulfils the requirements stipulated for such use. These requirements are that the material contributes to the optical and technical printing properties striven for in the paper production concerned, that it has such properties as not to give negative effects in comparison with conventional products on the market and that, from the resource, environmental and/or energy aspects, it contributes to effectivization of the paper manufacture.

In order to improve the quality, primarily the brightness, the inorganic material recovered is subjected to a suitable after-treatment in an after-treatment plant 15. This may be performed, for instance, by cleaning in a special magnetic separator of high-gradient type where the metal oxides formed during oxidation in the reactor, which reduce brightness, are removed. Dispersing agent may be added before the cleaning in order to achieve the best result. The brightness can also be improved by bleaching with a suitable bleaching agent, e.g. dithionite. A combination of these cleaning methods may also be used to achieve even higher brightness. Such an after-treatment can increase the brightness by 2 or more % ISO. The inorganic material recovered, with or without said after-treatment, can be used as filler in the manufacture of newspaper of various grades, for instance. If subjected to after-treatment as described above, it can be used as filler in products demanding higher brightness, such as magazine, LWC and fine paper.

If desired, the medium containing oxygen may be supplied at two or more points along the reaction vessel and/or before this. The predetermined total amount of medium containing oxygen can thus be distributed between these points in equal or different parts.

Pigment has a smaller average particle size than the filler. If a larger proportion of the waste paper comes from coated paper or cardboard it may be profitable, using suitable equipment, to divide or fraction the inorganic material into a first part having large particle size and a second part having smaller particle size, which applies to pigment. The first part then constitutes filler and the second part pigment which can be used in a coating paste.

Tests have shown that the inorganic material recovered in accordance with the invention is re-usable as filler in a paper manufacturing process. Tests have also shown that the re-use of filler recovered in accordance with the invention in printing paper gives satisfactory results as regards physical, optical and printing properties.

The following is an account of experiments performed in accordance with the invention.

Deinking sludge from a paper mill with a conventional deinking plant for waste paper was treated on a pilot scale in a flotation plant in order to reduce the proportion of fiber material in the deinking sludge. In conjunction with the flotation treatment some of the salts were also washed out of the deinking sludge. The proportion of filler, calculated on the dry solids content, was increased by the flotation treatment to 68% (32% organic) from 55% originally. The flotation process was not completely optimized during this experiment. With an optimized flotation process it should be possible to reach a filler content of 80%, calculated on the dry solids content. This value was achieved in another waste paper factory in experiments on a smaller scale. After the flotation treatment the dry solids content of the deinking sludge was increased to 20% in a dewatering device.

The above-mentioned dewatered deinking sludge was then treated in a SCWO process plant having a capacity of 250 1/h. The oxidation took place at a temperature of between 550°C and 580°C, a pressure of 25 MPa and a dwell time in the reactor of 1 minute. The filler in the material flow leaving the SCWO process plant had a brightness of 72-73% ISO. The filler from this experiment was then used in a full-scale experiment in a newspaper machine where it was mixed into the paper so that an increased filler content was obtained. Evaluation of this experiment showed that the properties of the filler recovered were as good as those of fresh filler.

In another experiment in the same SCWO process plant deinking sludge from another paper mill producing SC paper from waste paper was used. After the SCWO process treatment a filler having a brightness of 78-79% ISO was obtained.

Experiments were also performed in the above-mentioned SCWO process plant using deinking sludge to which extra filler in the form of clay and chalk had been added so that a filler content of 18% and a fiber content of 5.5% were attained, giving a total dry solids content of 23.5% and an organic material content of 23% calculated on dry solids content, in the deinking sludge supplied to the SCWO process plant. This deinking sludge could be run in the SCWO process plant without difficulty.

Samples of the same type of recovered filler as were used in the full-scale experiment in the paper machine were treated in a magnetic separator of high-gradient type. This treatment gave increased brightness of up to 3.5%-units ISO.

Experiments were also performed with the above-mentioned filler, with dithionite bleaching. This gave increased brightness of 1-2%-units ISO.

## Claims

1. A process for continuously recovering inorganic material from a deinking sludge obtained as reject material in the recovery of recycled fiber from waste paper, **characterized in that** it comprises the following steps:
(a) controlling and/or adjusting the proportion of organic material in the form of fiber material in the deinking sludge so that it is or becomes 15-40%, calculated on the dry solids content,
(b) adjusting the water content of the deinking sludge so that the dry solids content becomes 10-35%, step (a) and step (b) being so adjusted to each other that the deinking sludge is pumpable,
(c) increasing the pressure of the pumpable deinking sludge to at least 22 MPa,
(d) increasing the temperature of the pumpable deinking sludge to supercritical or almost supercritical temperature,
(e) adding a medium containing oxygen to the deinking sludge in a sufficient quantity to oxidize all organic material, which takes place at supercritical temperature and pressure in a reactor,
(f) recovering energy released at the oxidation of the organic material in a suitable form, and
(g) subjecting the flow of material from which energy has been recovered and which comprises said inorganic material, gases and water, to material separation comprising recovery of the valuable inorganic material.

2. A process as claimed in claim 1, **characterized in that** the quantity of organic material in said step (a) is 15-30%.

3. A process as claimed in claim 1 or claim 2, **characterized in that** said step (a) and step (b) are adapted to each other so that, after said step (b) the deinking sludge has a COD content within the interval 40-200 g/l, preferably 60-150 g/l.

4. A process as claimed in any one of claims 1-3, **characterized in that** in said step (d) the temperature is increased to at most 425°C.

5. A process as claimed in any one of claims 1-4, **characterized in that** the temperature in the reactor after said step (e) is at most 650°C.

6. A process as claimed in claim 5, **characterized in that** the temperature in the reactor is between 500°C and 600°C.

7. A process as claimed in any one of claims 1-6, **characterized in that** gaseous reaction products are separated from the flow of material in said step (g) and are released into the atmosphere or collected.

8. A process as claimed in claim 7, **characterized in that** carbon dioxide is recovered from the gases collected.

9. A process as claimed in any one of claims 1-8, **characterized in that** the deinking sludge is subjected to washing prior to said step (c).

10. A process as claimed in claim 9, **characterized in that** the deinking sludge has a salt content of at most 1000 ppm after said washing.

11. A process as claimed in any one of claims 1-10, **characterized in that** the oxidation time in the reactor is 10 minutes or less, preferably 5 minutes or less and most preferably 1 minute.

12. A process as claimed in any one of claims 1-11, **characterized in that** the fiber material is removed from the deinking sludge in order to achieve a content within the interval in step (a) by means of flotation, sedimentation, vortex cleaning, screening, centrifuging or a combination of two or more of these techniques.

13. A process as claimed in any one of claims 1-11, **characterized in that** the fiber material is removed from the deinking sludge in order to achieve a content within the interval in step (a) by means of flotation, sedimentation, vortex cleaning, screening, centrifuging, or a combination of two or more of these techniques being integrated into the deinking process.

14. A process as claimed in claim 12 or claim 13, **characterized in that** recycled fiber is recovered from the fiber material removed.

15. A process as claimed in any one of claims 1-11, **characterized in that** the fiber material is removed from the deinking sludge in order to achieve a content within the interval in step (a) by means of biological decomposition (aerobic or anaerobic) of a part of the fiber material, converting a part of the fiber material to ethanol through enzymatic or some other type of hydrolysis followed by fermentation, or a combination of two or more of these techniques.

16. A process as claimed in any one of claims 1-15, **characterized in that** the water content is adjusted in step (b) by means of sedimentation, vortex cleaning, centrifuging, pressing in a suitable press, or by a combination of two or more of these techniques.

17. A process as claimed in any one of claims 1-16, **characterized in that** the inorganic material obtained in step (g) has a brightness of at least 68% ISO.

18. A process as claimed in any one of claims 1-17, **characterized in that** the inorganic material obtained in step (g) is subjected to after-treatment in order to increase the brightness by 2 or more % ISO.

19. A process as claimed in claim 18, **characterized in that** the after-treatment comprises cleaning to remove brightness-reducing metal oxides and/or bleaching with a bleaching agent.

20. A process as claimed in any one of claims 1-19, **characterized in that** the valuable inorganic material recovered also contains pigment having a smaller particle size than the particle size of the filler, the inorganic material being divided into a filler fraction and a pigment fraction.

21. A process as claimed in any one of claims 1-20, **characterized in that** the energy in step (f) is recovered in the form of vapour and/or hot water.

22. A process as claimed in any one of claims 1-21, **characterized in that** the incoming deinking sludge has a dry solids content that is normally less than 8% prior to dewatering and contains organic material in a quantity that is normally over 35%, the remainder being inorganic material, calculated on the dry solids content.

## Patentansprüche

1. Verfahren zur kontinuierlichen Gewinnung von anorganischem Material aus einem Deinking-Schlamm, der als Ausschussmaterial bei der Gewinnung von recyceltem Faserstoff aus Altpapier erhalten wird, **dadurch gekennzeichnet, dass** es die folgenden Schritte umfasst:
(a) Kontrollieren und/oder Einstellen des Verhältnisanteils von organischem Material in der Form von Faserstoffmaterial in dem Deinking-Schlamm derart, dass er, berechnet auf den Trockensubstanzgehalt, 15-40 % ist oder wird,
(b) Einstellen des Wassergehalts des Deinking-Schlamms derart, dass der Trockensubstanzgehalt 10-35 % wird, wobei Schritt (a) und Schritt (b) zueinander so eingestellt werden, dass der Deinking-Schlamm pumpfähig ist,
(c) Erhöhen des Drucks des pumpfähigen Deinking-Schlamms auf wenigstens 22 MPa,
(d) Erhöhen der Temperatur des pumpfähigen Deinking-Schlamms auf superkritische oder fast superkritische Temperatur,
(e) Zusetzen eines sauerstoffhaltigen Mediums zu dem Deinking-Schlamm in einer ausreichenden Menge, um das gesamte organische Material zu oxidieren, was bei superkritischer Temperatur und Druck in einem Reaktor erfolgt,
(f) Gewinnen von Energie, die bei der Oxidation des organischen Materials in einer geeigneten Form freigesetzt wird, und
(g) Unterwerfen des Materialstroms, aus dem Energie gewonnen wurde und der das anorganische Material, Gase und Wasser umfasst, einer Materialtrennung, die Gewinnen des wertvollen anorganischen Materials umfasst.

2. Verfahren, wie es in Anspruch 1 beansprucht ist, **dadurch gekennzeichnet, dass** die Menge an organischem Material in Schritt (a) 15-30% ist.

3. Verfahren, wie es in Anspruch 1 oder Anspruch 2 beansprucht ist, **dadurch gekennzeichnet, dass** der Schritt (a) und der Schritt (b) so aufeinander abgestimmt sind, dass nach Schritt (b) der Deinking-Schlamm einen COD-Gehalt innerhalb des Bereichs von 40-200 g/l, vorzugsweise 60-150 g/l, hat.

4. Verfahren, wie es in einem der Ansprüche 1-3 beansprucht ist, **dadurch gekennzeichnet, dass** in Schritt (d) die Temperatur auf höchstens 425 °C erhöht wird.

5. Verfahren, wie es in einem der Ansprüche 1-4 beansprucht ist, **dadurch gekennzeichnet, dass** die Temperatur im Reaktor nach dem Schritt (e) höchstens 650 °C ist.

6. Verfahren, wie es in Anspruch 5 beansprucht ist, **dadurch gekennzeichnet, dass** die Temperatur im Reaktor zwischen 500 °C und 600 °C ist.

7. Verfahren, wie es in einem der Ansprüche 1-6 beansprucht ist, **dadurch gekennzeichnet, dass** gasförmige Reaktionsprodukte von dem Materialstrom in Schritt (g) abgetrennt werden und in die Atmosphäre freigesetzt oder gesammelt werden.

8. Verfahren, wie es in Anspruch 7 beansprucht ist, **dadurch gekennzeichnet, dass** Kohlendioxid aus den gesammelten Gasen gewonnen wird.

9. Verfahren, wie es in einem der Ansprüche 1-8 beansprucht ist, **dadurch gekennzeichnet, dass** der Deinking-Schlamm vor dem Schritt (c) einem Waschen unterworfen wird.

10. Verfahren, wie es in Anspruch 9 beansprucht ist, **dadurch gekennzeichnet, dass** der Deinking-Schlamm nach dem Waschen einen Salzgehalt von höchstens 1000 ppm hat.

11. Verfahren, wie es in einem der Ansprüche 1-10 beansprucht ist, **dadurch gekennzeichnet, dass** die Oxidationszeit in dem Reaktor 10 Minuten oder weniger, vorzugsweise 5 Minuten oder weniger und am bevorzugtesten 1 Minute ist.

12. Verfahren, wie es in einem der Ansprüche 1-11 beansprucht ist, **dadurch gekennzeichnet, dass** das Faserstoffmaterial aus dem Deinking-Schlamm entfernt wird, um einen Gehalt innerhalb des Intervalls in Schritt (a) zu erreichen, und zwar durch Flotation, Sedimentation, Vortex-Reinigung, Sieben, Zentrifugieren oder eine Kombination von zwei oder mehr dieser Techniken.

13. Verfahren, wie es in einem der Ansprüche 1-11 beansprucht ist, **dadurch gekennzeichnet, dass** das Faserstoffmaterial aus dem Deinking-Schlamm entfernt wird, um einen Gehalt innerhalb des Intervalls in Schritt (a) zu erreichen, und zwar mittels Flotation, Sedimentation, Vortex-Reinigung, Sieben, Zentrifugieren oder einer Kombination von zwei oder mehr dieser Techniken, die in das Deinking-Verfahren integriert sind.

14. Verfahren, wie es in Anspruch 12 oder 13 beansprucht ist, **dadurch gekennzeichnet, dass** der recycelte Faserstoff aus dem entfernten Faserstoffmaterial gewonnen wird.

15. Verfahren, wie es in einem der Ansprüche 1-11 beansprucht ist, **dadurch gekennzeichnet, dass** das Faserstoffmaterial aus dem Deinking-Schlamm entfernt wird, um einen Gehalt innerhalb des Intervalls in Schritt (a) zu erreichen, und zwar durch biologische Zersetzung (aerobe oder anaerobe) eines Teils des Faserstoffmaterials, Umwandeln eines Teils des Faserstoffmaterials in Ethanol durch enzymatische Hydrolyse oder einen anderen Hydrolysetyp, gefolgt von Fermentation, oder eine Kombination von zwei oder mehr dieser Techniken.

16. Verfahren, wie es in einem der Ansprüche 1-15 beansprucht ist, **dadurch gekennzeichnet, dass** der Wassergehalt in Schritt (b) mittels Sedimentation, Vortex-Reinigung, Zentrifugieren, Pressen in einer geeigneten Presse oder mittels einer Kombination von zwei oder mehr dieser Techniken eingestellt wird.

17. Verfahren, wie es in einem der Ansprüche 1-16 beansprucht ist, **dadurch gekennzeichnet, dass** das in Schritt (g) erhaltene anorganische Material eine Helligkeit von wenigstens 68 % ISO hat.

18. Verfahren, wie es in einem der Ansprüche 1-17 beansprucht ist, **dadurch gekennzeichnet, dass** das in Schritt (g) erhaltene anorganische Material einer Nachbehandlung unterworfen wird, um die Helligkeit um 2 oder mehr % ISO zu erhöhen.

19. Verfahren, wie es in Anspruch 18 beansprucht ist, **dadurch gekennzeichnet, dass** die Nachbehandlung eine Reinigung, um die Helligkeit reduzierende Metalloxide zu entfernen, und/oder ein Bleichen mit einem Bleichmittel umfasst.

20. Verfahren, wie es in einem der Ansprüche 1-19 beansprucht ist, **dadurch gekennzeichnet, dass** das wertvolle anorganische Material, das gewonnen wird, auch Pigment enthält, das eine kleinere Partikelgröße als die Partikelgröße des Füllstoffs hat, wobei das anorganische Material in eine Füllstofffraktion und eine Pigmentfraktion aufgeteilt wird.

21. Verfahren, wie es in einem der Ansprüche 1-20 beansprucht ist, **dadurch gekennzeichnet, dass** die Energie in Schritt (f) in der Form von Dampf und/oder heißem Wasser gewonnen wird.

22. Verfahren, wie es in einem der Ansprüche 1-21 beansprucht ist, **dadurch gekennzeichnet, dass** der ankommende Deinking-Schlamm einen Trockensubstanzgehalt hat, der normalerweise kleiner als 8 % vor der Entwässerung ist, und organisches Material in einer Menge enthält, die normalerweise über 35 % liegt, wobei der Rest anorganisches Material ist, berechnet auf den Trockensubstanzgehalt.

## Revendications

1. Procédé pour récupérer en continu la matière inorganique d'une boue de désencrage obtenue en tant que matière de rejet dans la récupération de fibres recyclées provenant de vieux papiers, **caractérisé en ce qu'**il comprend les étapes suivantes consistant à :
(a) commander et/ou ajuster la proportion de matière organique sous la forme de matière de fibre dans la boue de désencrage de sorte qu'elle est ou devient 15 à 40 %, calculée d'après la teneur en matière sèche,
(b) ajuster la teneur en eau de la boue de désencrage de sorte que la teneur en matière sèche devient 10 à 35 %, l'étape (a) et l'étape (b) étant ajustées l'une par rapport à l'autre de telle sorte que la boue de désencrage est pompable,
(c) augmenter la pression de la boue de désencrage pompable à au moins 22 MPa,
(d) élever la température de la boue de désencrage pompable à une température supercritique ou presque supercritique,
(e) ajouter un milieu contenant de l'oxygène à la boue de désencrage dans une quantité suffisante pour oxyder toute la matière organique, une oxydation qui se déroule à température et pression supercritiques dans un réacteur,
(f) récupérer l'énergie libérée au moment de l'oxydation de la matière organique sous une forme appropriée, et
(g) soumettre le flux de matière à partir de laquelle l'énergie a été récupérée et qui comprend ladite matière inorganique, des gaz et de l'eau, à une séparation de matière comprenant la récupération de la matière inorganique de valeur.

2. Procédé selon la revendication 1, **caractérisé en ce que** la quantité de matière organique dans ladite étape (a) est de 15 à 30 %.

3. Procédé selon la revendication 1 ou la revendication 2, **caractérisé en ce que** lesdites étapes (a) et (b) sont adaptées l'une à l'autre de sorte que, après ladite étape (b), la boue de désencrage présente une teneur en DCO dans l'intervalle de 40 à 200 g/L, de préférence 60 à 150 g/L.

4. Procédé selon l'une quelconque des revendications 1 à 3, **caractérisé en ce que** dans ladite étape (d), la température est élevée à une valeur d'au plus 425 °C.

5. Procédé selon l'une quelconque des revendications 1 à 4, **caractérisé en ce que** la température dans le réacteur après ladite étape (e) est d'au plus 650 °C.

6. Procédé selon la revendication 5, **caractérisé en ce que** la température dans le réacteur est comprise entre 500 °C et 600 °C.

7. Procédé selon l'une quelconque des revendications 1 à 6, **caractérisé en ce que** les produits de réaction gazeux sont séparés du flux de matière dans ladite étape (g) et sont relâchés dans l'atmosphère ou collectés.

8. Procédé selon la revendication 7, **caractérisé en ce que** du dioxyde de carbone est récupéré des gaz collectés.

9. Procédé selon l'une quelconque des revendications 1 à 8, **caractérisé en ce que** la boue de désencrage est soumise à un lavage avant ladite étape (c).

10. Procédé selon la revendication 9, **caractérisé en ce que** la boue de désencrage présente une teneur en sel d'au plus 1 000 ppm après ledit lavage.

11. Procédé selon l'une quelconque des revendications 1 à 10, **caractérisé en ce que** la durée d'oxydation dans le réacteur est de 10 minutes ou moins, de préférence 5 minutes ou moins et de manière préférée entre toutes de 1 minute.

12. Procédé selon l'une quelconque des revendications 1 à 11, **caractérisé en ce que** la matière de fibre est retirée de la boue de désencrage afin d'obtenir une teneur dans l'intervalle à l'étape (a) au moyen d'une flottation, d'une sédimentation, d'une épuration tourbillonnaire, d'un tamisage, d'une centrifugation ou d'une combinaison de deux de ces techniques ou plus.

13. Procédé selon l'une quelconque des revendications 1 à 11, **caractérisé en ce que** la matière de fibre est retirée de la boue de désencrage afin d'obtenir une teneur dans l'intervalle à l'étape (a) au moyen d'une flottation, d'une sédimentation, d'une épuration tourbillonnaire, d'un tamisage, d'une centrifugation ou d'une combinaison de deux de ces techniques ou plus intégrées dans le procédé de désencrage.

14. Procédé selon la revendication 12 ou la revendication 13, **caractérisé en ce que** de la fibre recyclée est récupérée de la matière de fibre retirée.

15. Procédé selon l'une quelconque des revendications 1 à 11, **caractérisé en ce que** la matière de fibre est retirée de la boue de désencrage afin d'obtenir une teneur dans l'intervalle à l'étape (a) au moyen d'une décomposition biologique (aérobie ou anaérobie) d'une partie de la matière de fibre, en convertissant une partie de la matière de fibre en éthanol par hydrolyse enzymatique ou quelque autre type d'hydrolyse, suivie d'une fermentation, ou une combinaison de deux de ces techniques ou plus.

16. Procédé selon l'une quelconque des revendications 1 à 15, **caractérisé en ce que** la teneur en eau est ajustée à l'étape (b) au moyen d'une sédimentation, d'une épuration tourbillonnaire, d'une centrifugation, d'un pressage dans une presse appropriée, ou par combinaison de deux de ces techniques ou plus.

17. Procédé selon l'une quelconque des revendications 1 à 16, **caractérisé en ce que** la matière inorganique obtenue à l'étape (g) présente une brillance d'au moins 68 % ISO.

18. Procédé selon l'une quelconque des revendications 1 à 17, **caractérisé en ce que** la matière inorganique obtenue à l'étape (g) est soumise à un post-traitement afin d'accroître la brillance de 2 % ISO ou plus.

19. Procédé selon la revendication 18, **caractérisé en ce que** le post-traitement comprend un nettoyage pour éliminer des oxydes métalliques réduisant la brillance et/ou un blanchiment avec un agent blanchissant.

20. Procédé selon l'une quelconque des revendications 1 à 19, **caractérisé en ce que** la matière inorganique de valeur récupérée contient également un pigment présentant une taille de particule plus petite que la taille de particule de la charge, la matière inorganique étant divisée en une fraction de charge et une fraction de pigment.

21. Procédé selon l'une quelconque des revendications 1 à 20, **caractérisé en ce que** l'énergie à l'étape (f) est récupérée sous la forme de vapeur et/ou d'eau chaude.

22. Procédé selon l'une quelconque des revendications 1 à 21, **caractérisé en ce que** la boue de désencrage entrante présente une teneur en matière sèche qui est normalement inférieure à 8 % avant déshydratation et contient de la matière organique dans une quantité qui est normalement supérieure à 35 %, le reste étant constitué de manière inorganique, calculée à partir de la teneur en matière sèche.
